# EUROPEAN PATENT APPLICATION

(11) **EP 2 028 893 A1**
(43) Date of publication of application: **25.02.2009**
(21) Application number: 07012616.4
(22) Date of filing: 27.06.2007
(51) Int. Cl.: H04W 24/00

(54) **Proxy network element and method of performance management in a network**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

A proxy network element (202), e.g. a network base station, is provided which is capable to perform some functions for another network element (203) which acts at that time as a source network element. This leads to the fact that the whole network, e.g. mobile network, becomes more flexible and possibly real-time monitorable, while not increasing the load imposed to a link between the network elements and a supervision authority, e.g. an element management system (201), in the network.

## Description

### Field of invention

The present invention relates to the field of network elements, in particular to proxy network elements and source network elements in a mobile network. Furthermore, the invention relates to a mobile network system, a method of performance management and fault management in a network a program element, and a computer-readable medium.

### Art Background

In today's mobile networks, the performance of network elements (NEs) is usually determined in an offline manner, i.e. the period of time (granularity period) where performance information from the NE is collected about every 15 minutes. At the end of each granularity period, the collected performance counter data are transmitted as raw data to an element management system (EMS) or higher-level performance management (PM) tools, where e.g. dedicated key performance indicators (KPIs) are calculated from the performance counter data that represent the state of certain properties of the NE, or where performance reports can be generated that represent the behaviour of dedicated properties or the whole NE over time. These information is used as input e.g. for offline network optimization.

There may be a need for a network element and a method of performance management in a network which provides an improved performance management.

### Summary of the Invention

This need may be met by a proxy network element, a source network element, a proxy selection server, a mobile network system, a method of performance management and fault management in a network, a program element, and a computer-readable medium according to the independent claims. Further embodiments of the present invention are described by the dependent claims.

According to an exemplary embodiment a proxy network element for a mobile network is provided, wherein the proxy network element comprises a processing unit, wherein the processing unit is adapted to perform specific functions of a source network element. In particular, the specific functions may relate to a preprocessing or processing of collected data of the source network element.

According to an exemplary embodiment a source network element for a mobile network is provided, wherein the source network element comprises a processing unit, and a data collector, wherein the processing unit is adapted to process data collected by the data collector, and wherein the processing unit is further adapted to transmit data collected by the data collector to a proxy network element in the mobile network for processing.

In particular, the collected data may be associated with performance management data or fault detection data. The collected data may be raw data, i.e. data which are not preprocessed or processed. For example, the collected data may be performance counter data that represent a state of certain properties of the source network element and that are suitable to calculate dedicated key performance indicators. In particular, the proxy network element may be a proxy network element according to the above described exemplary embodiment.

According to an exemplary embodiment a proxy selection server for a mobile network is provided, wherein the proxy selection server comprises an input terminal, and a selection server processing unit, wherein the input terminal is adapted to receive indication data indicative for a present status from a source network element and at least one proxy network element, and wherein the selection server processing unit is adapted to select one proxy network element for processing of collected data of the source network element.

In particular, the collected data may be load indication data and/or fault indication data, i.e. state indication data from which a load and/or a fault state of the source network element may be derived.

According to an exemplary embodiment a mobile network system is provided which comprises at least one proxy network element according to an exemplary embodiment, a source network element according to an exemplary embodiment, and an element management system, wherein the proxy network element, the source network element, and the element management system are connectable to each other by a mobile network, and wherein the element management system is adapted to calculate global performance indicators from the processed collected data and to create reports and visualisations of the processed data. In particular, the mobile network may be a mobile communication network, e.g. a GSM network or a UMTS network. In particular, the mobile network system may comprise a plurality of proxy network elements. The mobile network system may in particular include a performance management and fault management system.

According to an exemplary embodiment a method of performance management in a network comprising at least two network elements is provided, wherein the method comprises collecting data to be processed in a source network element, deciding whether a state of the source network element is suitable to process the collected data, and processing the collected data at a proxy network element in case it is decided that the state of the source network element is not suitable.

According to an exemplary embodiment a program element is provided, which, when being executed by a processor, is adapted to control or carry out a method of managing a performing of processing tasks according to an exemplary embodiment.

According to an exemplary embodiment a computer-readable medium, in which a computer program is stored which, when being executed by a processor, is adapted to control or carry out a method of managing a performing of processing tasks according to an exemplary embodiment.

The terms "proxy network element" and "source network element" may both particularly denote a network element in a mobile communication network, e.g. a mobile network base station, a base station of an LTE network, a base station of a UMTS network, a radio network controller of a UMTS network, or a base station controller of a GSM network, or the like.

In particular, the proxy network element and the source network element may not be different in construction but may only differ with respect to the function they perform in the mobile network at a given point in time. For example, at one point in time a first network element may act as a proxy network element and a second network element may act as a source network element and at another point in time the functions may be interchanged. A network element (NE) may even act at the same moment both as a source NE for the locally collected data and as a proxy NE for the data collected at a source NE. In general it should be noted that the term "performance management" has to be understood in the broadest possible sense, i.e. the term "performance management" may also include or relate to "fault management", since the management and/or monitoring of the performance of a system also include the management and/or monitoring of faults arising in a system. That is, in any situation the term "performance management" is used in this application, possibly also "fault management" and/or a combined performance and fault management may be meant.

By providing such an adaptation the proxy network element may function as a proxy for other (source) network elements in the mobile network. By providing a possibility to swap some specific functions to the proxy network element it may be possible to increase the potential of the whole mobile network, since most of the time not all but only a few of the network elements are busy. Thus, the proxy network elements, e.g. mobile base stations, which are not busy, may perform some functions for other network elements. For example, at daytime mobile base stations in city areas may be busy while base stations in rural districts may be underemployed, so that the base stations in rural districts may take over some specific functions of the base station. In particular, a whole.function or only a part of such a function may be swapped from the source network element to the proxy network element. By swapping some processor capacity consuming functions to another than the source network element a possibility to flexible react to changing processing power requirements of the monitored network element may be provided.

In particular, when using network elements according to exemplary embodiments it may not be necessary for real-time monitoring to keep an allover footprint of the real-time performance management small enough to prevent an Operation, Administration and Maintenance link and an element management system from being overloaded, e.g. by reducing the maximum number of network elements that can be monitored in parallel. Furthermore, it may not be necessary to reduce the maximum number of performance measurements (or real-time performance management tasks) that can be collected in parallel per network element or to extend the granularity period to reduce the amount of data being generated. Thus, it may be possible to prevent that conditions for real-time performance management are worsened, i.e. the chance to detect and eliminate performance degradations as soon as possible may not be reduced. In particular, the proxy network element may act as the source network element at another point in time. Thus, the proxy network element and the source network element may be interchangeable and only distinguished by the functions performed by the network element at a given point in time.

A gist of an exemplary embodiment may be seen in that a proxy network element, e.g. a network base station, may be provided which is capable to perform some functions for another network element which acts at that time as a source network element. This may lead to the fact that the whole network, e.g. mobile network, may become more flexible and possibly real-time monitorable, while not increasing the load imposed to a link between the network elements and a supervision authority, e.g. an element management system, in the network. In particular, the source network element may be operated in several modes. In a first mode, in case enough processor capacity is available at the source network element, the processing relating to the collected data may be performed at that source base station itself. In a second operation mode, in case no processor capacity is available for processing the collected data, the processing is swapped to another, i.e. proxy, network element. Furthermore, in a third operation mode some processing may be performed at the source network element and some processing may be performed at the proxy network element. The decision to swap or shift the processing may not only depend on the present processing capacity of the source network element, but also on the present link load between the source network element and other nodes in the network. In particular, in cases where the link load is already high no shifting may take place since this may increase the link load even more. In such a case it may be a possibility to cease or simplify some processing tasks.

According to this aspect a performance management system may include a function for deciding when the processing should be shifted from a source network element (NE) to a proxy NE and when the processing should be returned to the source NE. The decision may be based on the processing loading and Operation, Administration, Maintenance (OAM) bandwidth availability of the source NE. Further, it may include a function for selecting an appropriate proxy NE out of the pool of NEs within the same network domain. The decision where to shift the load may be based on load information acquired from the NEs. Furthermore, it may include a mechanism for shifting the processing tasks partially or completely to the proxy NE and for returning the tasks to the source NE when the proxy function is no longer needed. Additionally, it may further include a mechanism for allowing a proxy NE to preempt the processing of other NE(s) in case it does not have sufficient processing power capacity any longer.

Next, further exemplary embodiments of the proxy network element are described. However, these embodiments also apply to the source network element, the proxy selection server, the mobile network system, the method of performance management in a network, the program element, and the computer-readable medium.

According to another exemplary embodiment of the proxy network element the specific function relates to a state indication function, e.g. a performance management function and/or a fault detection function.

By providing an ability to swap some functions of a performance management between different network elements it may be possible to increase the frequency with which the performance of the source network elements is monitored without increasing the data flow via the link from the source network element to a network element management system, since in this case a compressing of the data or a preprocessing of the data may be performed by the network elements, either the proxy network element, and/or by the source network element. Thus, an introduction of real-time (RT) performance management (PM) with granularity periods of 1 minute or less, as strongly requested by mobile operators of the mobile communication network, may be achievable. Thus, even a continuous supervision of network elements may be possible, so that the detection of performance degradations may be possible immediately, before even an alarm may be emitted, which may enable the mobile operator to quickly react and ensure service continuity.

According to another exemplary embodiment the proxy network element further comprises a state monitor, wherein the state monitor is adapted to monitor a present state of the processing unit. In particular, the function of the state monitor may be performed by the processing unit, e.g. by using a software implementation. The state monitor may be adapted to monitor a load state and/or a link state of the network element.

According to another exemplary embodiment the proxy network element further comprises a determination unit, wherein the determination unit is adapted to determine whether the present load is below a predetermined threshold.

In particular, the function of the determination unit may be either performed by a dedicated unit or may be performed by the processing unit or the load monitor as well, i.e. the determination unit is not necessarily a unit distinct to the processing unit or the load monitor. For example, the determination may result in load indication data, which may be sent to other units connected to the mobile network.

According to another exemplary embodiment of the proxy network element the proxy network element is adapted to send a load indication flag into the mobile network. In particular, the flag may indicate whether a present processing load is below a first predetermined threshold. In particular, the proxy network element may be adapted to send a flag into the mobile network in case the present processing load is above a second predetermined threshold.

By providing such a flag or another kind of indication for the mobile network and thus to other network elements it may be possible to indicate to these other network elements, e.g. source network elements, that the specific (proxy) network element would be able to perform some processing for these other network elements. That is, such a flag may indicate that the specific proxy network element has free processing capacity which it may make available for other network elements. By using also a flag to indicate that the present processing load is above the second predetermined threshold, which may be the same or a higher threshold than the first predetermined threshold, it may be possible to indicate that a presently performed processing for another source network element has to be ceased by that proxy network element. Such a flag may be send directly to said source network element.

According to another exemplary embodiment the proxy network element further comprises a first input terminal, wherein the first input terminal is adapted to receive collected data from the source network element. In particular, these collected data may relate to performance management functions or to fault management functions. For example these data may be so-called performance counter data, or state change event reports.

According to another exemplary embodiment the proxy network element further comprises a first output terminal, wherein the first output terminal is adapted to transmit output data associated with the specific function. In particular, these output data may relate to a specific function, e.g. these output data may include processed performance counter data. The output terminal may be adapted to be connected to an element management system.

Next, further exemplary embodiments of the source network element are described. However, these embodiments also apply to the proxy network element, the proxy selection server, the mobile network system, the method of performance management in a network, the program element, and the computer-readable medium.

According to another exemplary embodiment the source network element further comprises a state monitor, wherein the state monitor is adapted to monitor a present state of the processing unit. In particular, the function of the state monitor may be performed by the processing unit, e.g. by using a software implementation. The state monitor may be adapted to process or preprocess the collected data to generate state indication data. In particular, the state may relate to the load state and/or to a fault detection.

According to another exemplary embodiment the source network element further comprises a determination unit, wherein the state monitor is adapted to monitor a present load state, and wherein the determination unit is adapted to determine whether the present load is above a first predetermined threshold. In particular, the source network element may be adapted to send a part of the collected data to a proxy network element, which is adapted to perform some processing functions, in case the present load is higher than the first threshold.

In particular, the function of the determination unit may be performed by the processing unit or the state or load monitor as well, i.e. the determination unit is not necessarily a unit distinct to the processing unit or the state monitor. In case the present load is above the first predetermined threshold a portion of the collected data may be send to another network element (proxy network element) which is adapted to perform some preprocessing or processing functions.

According to another exemplary embodiment of the source network element the determination unit is further adapted to determine whether the present load is above a second predetermined threshold which is higher than the first predetermined threshold, and wherein the source network element is adapted to send all collected data to a proxy network element, which is adapted to perform some preprocessing functions, in case the present load is higher than the second threshold.

According to another exemplary embodiment of the source network element the source network element is adapted to stop the sending of the collected data in case the present load is below the first threshold.

That is, in case the present or current processing capacity of the source network element is sufficient the processing of the collected data on a proxy network element may be stopped and may be relocated to the source network element. Thus, a data load on a link between the network elements may be decreased. In particular, the Operation, Administration and Maintenance traffic on the mobile network may be decreased.

Next, further exemplary embodiments of the source network element are described. However, these embodiments also apply to the proxy network element, the proxy selection server, the mobile network system, the method of performance management in a network, the program element, and the computer-readable medium.

According to another exemplary embodiment of the mobile network system the element management system is adapted to control the mobile network depending on the calculated performance indicators.

That is, the element management system may be a centralized system or system component used to manage and/or control the mobile network or parts thereof.

According to another exemplary embodiment the mobile network system further comprises a peer to peer connection between the proxy network element and the source network element. In particular, the mobile network may comprise a plurality of proxy network elements, and a peer-to-peer network may be implemented between the plurality of proxy network elements and the source network element.

The provision of a peer to peer connection between the source network element and the proxy network element may be an efficient way to provide a connection between the two network elements to transfer the collected data from the source network element to the proxy network element at which a processing or preprocessing of the data may be performed. In case a plurality of proxy network elements are provided at least some or all of the proxy network elements may be adapted to forward a request for processing coming from the source element to another one of the plurality of proxy network elements via the peer-to-peer network.

According to another exemplary embodiment the mobile network system further comprises a proxy selection server according to an exemplary embodiment, wherein the proxy selection server is connectable to the proxy network element and to the source network element. In particular, the proxy selection server may be adapted to chose a specific one of the at least one proxy network element.

Summarizing an exemplary aspect of the invention may be seen in the fact that a management system for a plurality of network elements, which may act as source network elements or proxy network elements is provided, wherein the network elements, which act as source network element, are adapted to collect data associated to a performance of the respective network element. These collected data are processed in principle on the respective source network element itself in order to possibly allow fast anomaly detection and ensure less data traffic. However, the network elements are adapted to perform processing of collected data for other network elements as well, i.e. they may act as a proxy network element. Thus, it may be possible to ensure a shorter monitoring circle while not increasing the traffic load in the mobile network or the processor requirements in each single network element. That is, a network element in a mobile network having available processing capacity may perform some processing of collected data, e.g. data associated to the performance of the network element or to a failure of the network element.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered to be disclosed within this application.

The aspects and exemplary embodiments defined above and further aspects of the invention are apparent from the example of embodiment to be described hereinafter and are explained with reference to these examples of embodiment.

### Brief Description of the Drawings

Fig. 1 schematically shows a mobile network system having a performance management included.
Fig. 2 schematically shows a mobile network system in accordance with a first embodiment having a performance management included.
Fig. 3 schematically shows a mobile network system in accordance with a second embodiment having a performance management included.
Fig. 4 schematically shows a mobile network system in accordance with a third embodiment having a performance management included.

### Detailed Description

The illustration in the drawings is schematic. It is noted that in different figures, similar or identical elements are provided with the similar or identical reference signs.

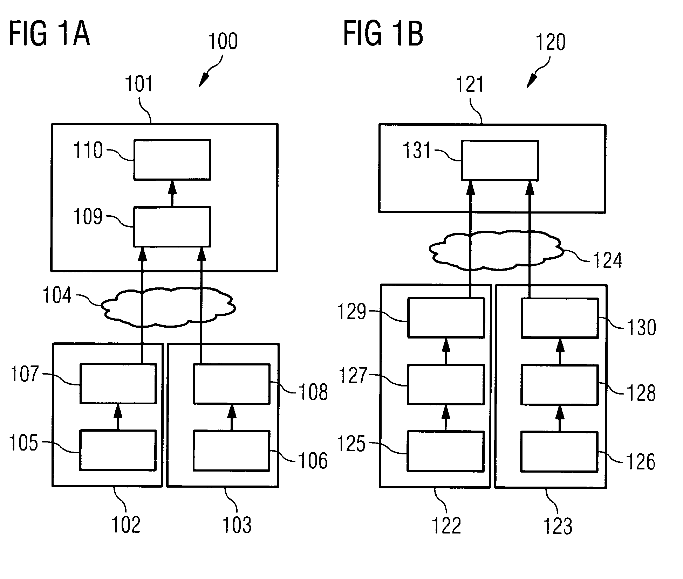

With reference to Fig. 1 a mobile network system will be described. In this context also some recognitions and observations of the inventors will be mentioned on which exemplary embodiments of the invention are based.

In conventional mobile networks, the performance of network elements (NEs) is usually be determined in an offline manner, i.e. the period of time (granularity period) where performance information from the NE is collected at a cycle of at minimum 15 minutes. At the end of each granularity period, the collected performance counter data are transmitted as raw data to an element management system (EMS) or higher-level performance management (PM) tools, where e.g. dedicated key performance indicators (KPIs) are calculated from the performance counter data that represent the state of certain properties of the NE, or where performance reports can be generated that represent the behaviour of dedicated properties or the whole NE over time, which represents the so-called EMS-centric solution, which will be explained in more detail with reference to Fig. 1a. These information may be used as input e.g. for offline network optimization.

The introduction of real-time performance management (RT- PM) with granularity periods of 1 minute or less may allow the continuous supervision of NEs. The advantages may be e.g. the detection of performance degradations immediately, before even an alarm is emitted, enabling the operator to quickly react and ensure service continuity. The EMS centric solution as it is used with offline PM may reach its limitations due to the available Operation, Administration and Maintenance (OAM)-link bandwidth and the available EMS processing power, since one EMS may have to serve several thousands of NEs. Therefore, for RT-PM a preprocessing of the performance counter data at the NE may be used to relief EMS and OAM link. The preprocessing can be done lossless, e.g. by just compressing the performance counter data and transmitting it to the EMS for further processing (no EMS relief), or lossy e.g. by KPI calculation direct at the NE, where only resulting KPI values are transmitted to the EMS, or by semantic compression algorithms with no loss of useful information for the operator, which represents the so-called NE-centric solution, which will be explained in more detail with reference to Fig. 1b. These solutions may require increased processing power at the NE.

However, the available processing power at the NE is limited and this limitation changes over time, e.g. due to network load conditions and therefrom load conditions at the NE itself. The average NE load situation may typically change over time (though slowly). Furthermore, the peak load situation may change quickly over time dependent on the current tasks in progress, e.g. amount of current call processing tasks, amount of OAM tasks. When the available NE processing time is low, the compression function may introduce large delays in PM data delivery and input buffer overflows may occur. This problem gets more and more severe when the granularity period is shortened, due to an increasing amount of data to be transmitted and processed.

Similarly to performance management, it may be preferable that fault management processing is handled as close as possible to the NEs, since it may allow for a fast detection of problems and may avoid that all raw measurements and device states for fault detection and analysis need to be forwarded to the EMS. Fault management processing at the NE may include sensor and device status monitoring in order to detect suspicious events, event analysis for triggering alarms, correlation of alarms from multiple sources within the NE (e.g. blades) and even local reconfigurations to resolve the fault. However, higher priority tasks at the NE may not always leave sufficient processing power for a local fault management data processing.

Fig. 1a schematically shows an EMS-centric solution of a performance management system of a mobile network. The mobile network 100 comprises an element management system 101 and a plurality of network elements 102 and 103. The network elements and the element management system are connected via a link, e.g. an OAM network indicated by the cloud 104. Each NE comprises a set of counter objects 105 and 106, respectively. Furthermore, each NE comprises a performance management data collector 107 and 108, respectively. In the EMS-centric solution shown in Fig. 1a the collected data are transmitted to the EMS 101 as raw data. In the EMS 101 the collected data are processed 109 and the resulting performance management data may be displayed at a display 110.

Fig. 1b schematically shows an NE-centric solution of a performance management system of a mobile network. The mobile network 120 comprises an element management system 121 and a plurality of network elements 122 and 123. The network elements and the element management system are connected via a link, e.g. an OAM network indicated by the cloud 124. Each NE comprises a set of counter objects 125 and 126, respectively. Furthermore, each NE comprises a performance management data collector 127 and 128, respectively. Additionally to the embodiment shown in Fig. 1a the NEs of Fig. 1b also include a performance management data processing unit 129 and 130 each. Thus, in the NE-centric solution shown in Fig. 1b the collected data are already processed in the respective NEs and the processed data are transmitted to the EMS 121. At the EMS 121 the resulting performance management data may be displayed at a display 131.

Thus, Fig. 1 gives a view of the association of the basic current functional blocks for PM data generation and transmission to the NE and EMS for the EMS-centric and NE-centric case respectively.

With an EMS centric solution (Fig. 1a) for RT-PM, the load on the OAM link between NE and EMS may result in either impairments for other traffic on the same link or additional investment to increase the link capacity.

With an either NE or EMS centric solution for RT-PM, the processing load at respective the NEs and the EMS may result in either impairments for other processes on the respective same NE / EMS or additional investment to increase the processing capability which may result in raising Operational Expenditure (OPEX) and Capital Expenditure (CAPEX).

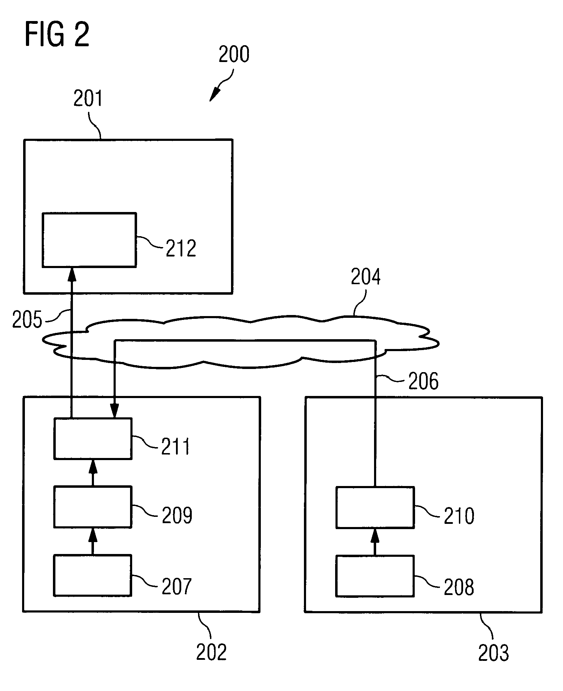

Based on the above described findings of the inventors a performance management system of a mobile network according to an exemplary embodiment will be described. The performance management system 200 comprises an element management system 201 and a plurality of network elements 202 and 203. In the case shown in Fig. 2 the network element 202 acts as a proxy network element, while the network element 203 acts as a source network element. However, this discrimination is only due to the function the respective network element performs at a given point in time. The network elements and the element management system are connected via a link, e.g. an OAM network indicated by the cloud 204. However, for clarity reasons only the link between the proxy network element 202 and the EMS 201 and the link between the proxy network element 202 and the source network element 203 are indicated by the arrows 205 and 206 in Fig. 2. Each NE comprises sensor and counter object 207 and 208, respectively. Furthermore, each NE comprises a performance management data collector 209 and 210, respectively. Additionally, each NEs include a performance management data processing unit 211, wherein for clarity reasons only in case of the network element 202 acting as a proxy network element the respective performance management data processing unit is shown.

In the performance management data processing unit 211 the collected data of the source network element 203 are processed and transferred to the EMS 201 which comprises a display 212 on which the resulting performance management data may be displayed.

Thus, the proxy network element 202 may perform some or all of the processing which, in the NE-centric solution shown in Fig. 1b, is performed by the source network element itself, so that the processing load at the source network element may be decreased. However, the load on the link between the network elements and the EMS 201 may not as high as it would be in the case of an EMS-centric solution as shown in Fig. 1a.

In the following the operation of the system 200 may be described in more detail. By default, the performance/fault management (PM/FM) processing or tasks shall be executed at the respective NE, since this may allow for fast anomaly detection and generates the least OAM traffic on the network. When a situation occurs where the processing time at an NE (source NE) is not sufficient to perform the tasks, a mechanism may be started at the source NE to shift these tasks partially or completely to another NE (proxy NE) that has currently spare processing and bandwidth capacity. The source NE sends the collected raw data for the processing to the proxy NE. The proxy NE processes the data and sends the processing results, e.g. alarms or compressed PM data, to the EMS of the respective source NE. When the load situation on the source NE returns to a normal state, the source NE may cease the remote processing on the proxy NE and may resume the processing at the own node. Thus, the processing may be dynamically shifted between a source NE and an arbitrary but appropriate proxy NE. Depending on the source NE processing load, it may not be required to shift all processing tasks to the proxy NE. The system may operate in "hybrid" operation, whereby part of the tasks is executed at the Source NE and part of the tasks is executed at the proxy NE, e.g. the source NE may calculate KPIs and forward them to the proxy NE, where a threshold verification and compression may be applied on these KPIs.

In the case that there is no proxy NE available or when NE load conditions do not allow for raw data forwarding, other actions may be invoked at the NE for coping with the lack of processing power, such as PM data delivery reduction or even ceasing of tasks.

The solution of Fig. 2 may be beneficial for NE types that have few processing capacity for dealing with busy hour demand, while under normal load conditions there is considerable spare capacity available for acting as a proxy NE. Another condition may be the existence of secure peer-to-peer connections between source NE and proxy NE, i.e. no hierarchical architecture is used to forward raw data between source NE and proxy NE, (a hierarchical architecture would possibly need to pass higher levels in the hierarchy), so that link load bottlenecks may be less probable without increasing the complexity of the solution. However, a secure peer-to-peer connection is not a mandatory condition, since mechanisms exist for establishing secure connections between NE's dynamically, but they may increase the complexity of the solution.

Examples of applicable NE types may be LTE base stations or WLAN access points, which are both designed to operate in a meshed network architecture for handover signalling purposes.

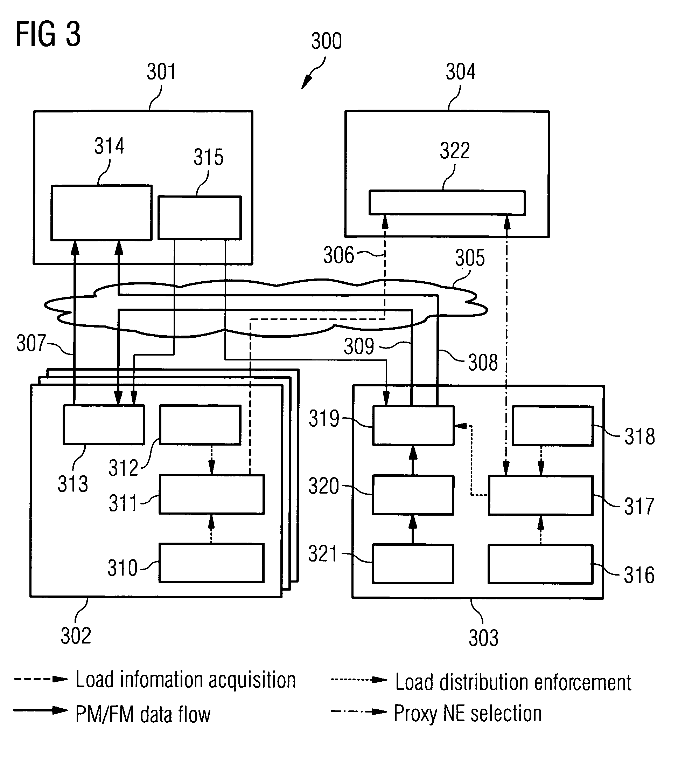

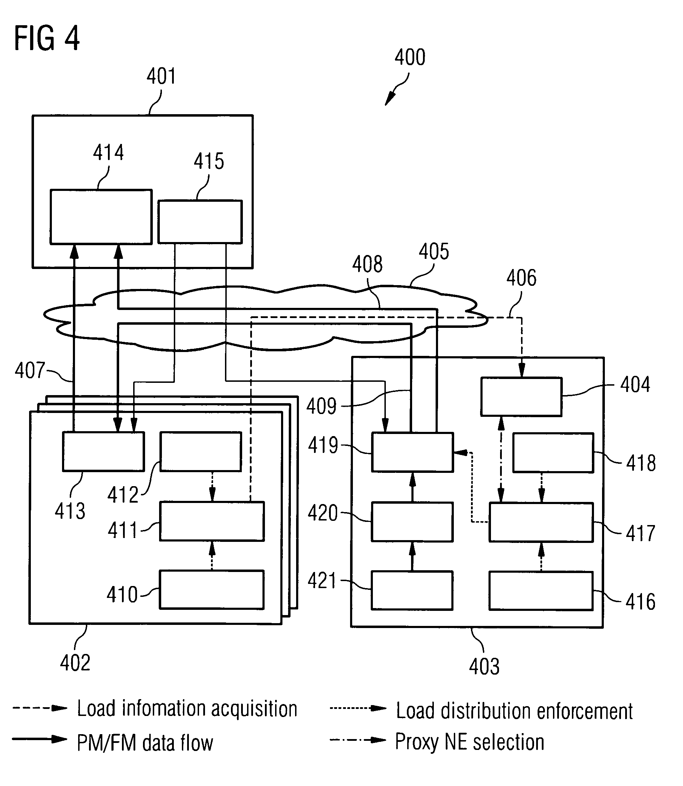

In principle the decision for shifting the processing may be taken autonomously at the NE, i.e. in a distributed manner. The selection of a proxy NE may be centralized or distributed. These two alternative approaches may be outlined in greater detail with reference to the Fig. 3 and Fig. 4.

Fig. 3 schematically shows an exemplary embodiment of a performance management system implementing a centralized solution.

The performance management system 300 comprises an element management system 301, a plurality of network elements 302 and 303, and a proxy selection server (PSS) 304, which comprises a selection logic or processing unit 322. In the case shown in Fig. 3 the network element 302 acts as a proxy network element, while the network element 303 acts as a source network element. However, this discrimination is only due to the function the respective network element performs at a given point in time. Some additional network elements acting as potential proxy network elements are indicated by the further rectangles indicated behind the proxy network element 302.

The network elements, the proxy selection server, and the element management system are connected via a link, e.g. an OAM network indicated by the cloud 305. In particular, a link for load information acquisition data is indicated by arrow 306 connecting the proxy network element 302 and the PSS 304. Further links relating to PM/FM data flow between the EMS 301 and the network elements 302 and 303 are indicated by the arrows 307, 308 and 309. Furthermore, a link is implemented between the source NE 303 and the PSS 304 for data relating to a proxy NE selection.

As already mentioned each network element may act either as a proxy network element or as a source network element. However, for clarity reasons in Fig. 3 only the portions are depicted and described in greater detail which are important for the respective function.

The proxy network element 302 comprises an NE processing load/state monitor 310, which is connected to an NE load reporter 311, which is connected to the PSS and to an NE link load/state monitor 312. This NE load reporter 311 may also function as a determination unit to determine whether the present load is below or above predetermined thresholds. Furthermore, the proxy NE comprises a PM/FM data processing unit 313 which is connected to the source NE 303 by the link 309 and further connected, via the link 307, to a PM/FM data display and analysis unit 314 at the EMS 301. The EMS further comprises a processing administration unit 315 which is also connected to the PM/FM data processing unit 313 of the proxy NE.

The source network element 303 comprises an NE processing load/state monitor 316, which is connected to an NE load distribution logic 317, which is connected to the PSS by the proxy NE selection link and to an NE link load/state monitor 318. This NE load distribution logic 317 may also function as a determination unit to determine whether the present load is below or above predetermined thresholds. Furthermore, the source NE comprises a PM/FM data processing unit 319 which is connected to the proxy NE 302 by the link 309 and further connected, via the link 308, to the PM/FM data display and analysis unit 314 at the EMS 301. Furthermore, the PM/FM data processing unit 319 is connected to a PM/FM data collector 320 at the source NE 303 which is in turn connected to sensor and counter objects 321.

In the following the function and the basic principles of the exemplary embodiment of Fig. 3 will be explained in more detail.

According to the centralized solution shown in Fig. 3 acquisition of information on the link and processing load status of a pool of NE's is done by the PSS function. As a result, the PSS can maintain a list of potential proxy NE's. The server function may be implemented on several alternative physical nodes, e.g. at the EMS of the NE pool, at a higher level hierarchical NE, e.g. an Access Gateway in the LTE architecture, or at a stand-alone platform.

In any case there should be provision for a fallback instance of the server in case of a failure. NE's may periodically provide their load status to the PSS, allowing the server to decide which NE's are potential proxy NE's and which NE's should cease acting as a proxy. Alternatively, NE's may decide for themselves whether they are volunteering for acting as a proxy or want to cease the proxy function, and inform the server about their volunteership and load status. The latter approach may allow reducing the traffic between the NE's and the PSS.

A further feature may be a decision on the load distribution between the source NE and a proxy NE according to a defined strategy (NE Load Distribution Logic function). To this aim, an NE permanently may evaluate its own load situation. Table 1 shows an example for such a decision strategy based on load information (low, medium, high). A medium or high processing load level may represent the threshold for triggering the shifting of processing tasks to a proxy NE. A medium load level triggers a partial shifting of the tasks while a high load level triggers the complete shifting of all processing tasks.

A further feature may be proxy NE selection. The source NE interrogates the PSS for dynamic allocation of a proxy NE. Primary conditions for considering an NE as a potential proxy NE may be that there must be sufficient spare load capacity, and that the proxy NE has a peer-to-peer connectivity with the source NE. In addition, the PSS may take several criteria into account for prioritisation between multiple potential proxy NEs, e.g. current load level on the potential NEs, distance between both NEs, e.g. number of router hops, expected loading of the potential NE in the near future etc..

A further feature may be enforcement of the processing distribution decision at the NEs. The source NE ceases the local processing of the tasks to be distributed and negotiates peer-to-peer with the proxy NE to perform the processing remotely. This may imply the exchange of required information for continuing the processing, such as the tasks to be taken over, processing task contexts, EMS OAM transport address, security association with the EMS etc.. The EMS related information may be needed when the proxy NE is served by another EMS than the source NE EMS. The proxy NE then acquires the task configuration data from the EMS processing administration function. After the proxy NE has been properly configured, the source NE starts forwarding the raw data to the proxy NE. The proxy NE sends the processing result data to the source NE's EMS. Any changes to the processing configuration of the source NE (usually by the EMS) shall be communicated to the proxy NE as well.

A further feature may be ceasing remote processing. A source NE may at any time request the proxy NE to cease the processing of its tasks. The source NE informs the proxy NE via the peer-to-peer interface, e.g. with a cease request in the forwarded raw data. The proxy NE shall then reply that processing is terminated and include the task context data (if any). The source NE shall then stop forwarding raw data and continue the processing locally.

A further feature may be withdrawal of a proxy NE. The proxy NE may decide to cease acting as a proxy NE. Similarly, the PSS may decide that the processing load may better be shifted to another proxy NE. In these cases the proxy NE shall return the processing task(s) (with the task context data, if any) to the source NE. Then the source NE starts a new proxy NE selection, as well as re-enforcing the processing distribution to the newly selected NE.

A proxy NE failure may be detected by source NE, PSS or EMS. In any case the source NE shall be informed and the source NE shall re-establish the delegated processing tasks on another proxy NE. Since any task context data is lost, processing must restart from an idle state, which may result in some effects on the processing result.

Fig. 4 schematically shows an exemplary embodiment of a performance management system implementing a distributed solution.

The performance management system 400 comprises an element management system 401, a plurality of network elements 402 and 403. Contrary to the centralized embodiment of Fig. 3 in the distributed solution of Fig. 4 a proxy selection logic 404 is a part of the source NE 403 itself. In the case shown in Fig. 4 the network element 402 acts as a proxy network element, while the network element 403 acts as a source network element. However, this discrimination is only due to the function the respective network element performs at a given point in time. Some additional network elements acting as potential proxy network elements are indicated by the further rectangles behind the proxy network element 402.

The network elements and the element management system are connected via a link, e.g. an OAM network indicated by the cloud 405. In particular, a link for load information acquisition data is indicated by arrow 406 connecting the proxy network element 402 and the proxy selection logic 404. Further links relating to PM/FM data flow between the EMS 401 and the network elements 402 and 403 are indicated by the arrows 407, 408 and 409.

As already mentioned each network element may act either as a proxy network element or as a source network element. However, for clarity reasons in Fig. 4 only the portions are depicted and described in greater detail which are necessary for the respective function.

Thus, the proxy network element 402 comprises an NE processing load/state monitor 410, which is connected to an NE load reporter 411, which is connected to proxy selection logic 404 and to an NE link load/state monitor 412. This NE load reporter 411 may also function as a determination unit to determine whether the present load is below a predetermined threshold. Furthermore, the proxy NE comprises a PM/FM data processing unit 413 which is connected to the source NE 403 by the link 409 and further connected, via the link 407, to a PM/FM data display and analysis unit 414 at the EMS 401. The EMS further comprises a processing administration unit 415 which is also connected to the PM/FM data processing unit 413 of the proxy NE.

The source network element 403 comprises an NE processing load/state monitor 416, which is connected to an NE load distribution logic 417, which is connected to the proxy selection logic 404 and to an NE link load/state monitor 418. This NE load distribution logic 417 may also function as a determination unit to determine whether the present load is below or above predetermined thresholds. Furthermore, the source NE comprises a PM/FM data processing unit 419 which is connected to the proxy NE 402 by the link 409 and further connected, via the link 408, to the PM/FM data display and analysis unit 414 at the EMS 401. Furthermore, the PM/FM data processing unit 419 is connected to a PM/FM data collector 420 at the source NE 402 which is in turn connected to sensor and counter objects 421.

In the following the function and the basic principles of the exemplary embodiment of Fig. 4 will be explained in more detail.

According to the distributed solution shown in Fig. 4 a decision on the need for load distribution at a source NE may be performed. This may be the same function as in the centralized solution (see Table 1 for a strategy example).

A further feature may be the acquisition of information on the link and processing load status of a pool of NEs by a source NE. Source NEs can determine potential proxy NEs proactively or reactively. When operating proactively, each NE may permanently gather a list of potential proxy NEs. This may be achieved by periodic multicasts of each NE's load status within a network area, or NEs may multicast an indication that they are volunteering for acting as a proxy NE. The multicasts may cause high network traffic overhead. When operating reactively, a source NE only acquires the information when the need for load distribution arises. The source NE than determines potential proxy NEs by either:
1. interrogating neighbour NEs via the peer-to-peer connection. There may be a chance that neighbour NEs are too loaded.
2. searching volunteering NEs in a peer-to-peer chain, e.g. A requests B, if not a volunteer, B forwards request to its neighbour C etc.. This may be an efficient solution, because there may be low signalling overhead and a volunteer can be found behind the neighbour borders.
3. advertising a proxy NE request within a restricted area. Potential proxy NEs are expected to reply to the source NE. Although the multicasts generate less traffic than in the pro-active solution, bursts of reply messages need to be taken into account.

To limit search times, with methods (1) and (2) most likely only a single proxy NE can be defined, such that no equal load distribution over proxy NE's can be achieved.

A further feature may be proxy NE selection. The source NE allocates a proxy NE from the candidates acquired proactively or reactively. The selection criteria are the same like in the centralized solution.

A further feature may be enforcement of the processing distribution decision at the NEs. This function may be identical like in the centralized solution.

A further feature may be ceasing remote processing. This function may be identical like in the centralized solution.

A further feature may be withdrawal of a proxy NE. The proxy NE may decide to return the processing tasks to the source NE. In this case the task context data are returned to the source NE. Then the source NE starts a new proxy NE selection, as well as re-enforce the processing distribution to the newly selected NE.

A further feature may be proxy NE failure. This may be detected by source NE or the EMS. In any case the source NE shall be informed and the source NE shall re-establish the delegated processing tasks on another proxy NE. Since any task context data is lost, processing restart from an idle state, which may result in some effects on the processing result.

For both solutions (centralized and distributed), the information exchanges between an NE and an EMS or PSS may be integrated with conventional element management protocols. For the peer-to-peer communication between the NEs a specific load distribution control protocol may be used.

In the centralized solution the PSS may be able to control an entire group of NE in a coordinated way, possibly allowing for equal load distribution among the proxy NEs. Because potential proxy NEs are collected proactively, proxy NE selection can be accomplished very fast. Also the centralized solution allows for easier control of the proxy allocation (e.g. a temporary exclusion of a NE for acting as a proxy by operator administration).

In the following in Table 1 some strategy examples for processing load distributions are described which may be used in a performance management system according to an exemplary embodiment.

| Starting Situation | | | | Resulting Situation | | |
|---|---|---|---|---|---|---|
| System State * | processing load Source NE | Link Load ** | Action*** | processing load Source NE** | Link Load ** | System State * |
| S | L | L | none | L | L | S |
| S | M/H | L | H | M/H | L | H |
| S | L/M/H | H | R | L/M/H | L | S |
| H | H | L | P | H | L | P |
| H | M | L | none | M | L | H |
| H | L/M/H | H | R | L/M/H | L | H |
| H | L | L | S | L | L | S |
| P | M | L | H | M | L | H |
| P | H | L | none | H | L | P |
| P | L/M/H | H | R | L/M/H | L | P |
| P | L | L | S | L | L | S |

In Table 1 the following abbreviations are used. For the columns labelled "*" (i.e. System State):
S denotes processing only on source NE,
H denotes hybrid processing (= partial processing on source and proxy NE), and
P denotes processing only on proxy NE

For the columns labelled "**" (i.e. processing load source NE, and Link Load):
L denotes low load,
M denotes medium load, and
H denotes high load

For the column labelled "***" (i.e. Action)
H denotes start hybrid processing,
P denotes start full remote processing,
S denotes return processing to source NE, and
R denotes reduce processing tasks

In this scheme the processing is partially shifted to a proxy NE when a medium processing load threshold is exceeded. When the processing load on the source NE maintains a high level, the processing is completely shifted to the proxy NE. Even with a high processing load, always first the hybrid operation may be tried out, because this may reduce the source NE load to a medium level. However, when the link load level of the source NE is high, the processing is not shifted, as this would further increase the link load. Rather, in that case some processing tasks may be ceased or simplified (= action R).

Summarizing some advantages of some exemplary embodiments may be a controlled overall system load and a transparent scalability without ongoing load-related reconfigurations, in particular the operator may not need to worry about the configuration of the performance data retrieval as the system is able to adjust itself to the load conditions. The network equipment vendor may not need to introduce conservative rough limits on the number of supported NEs and allowed number of performance measurements to be monitored per EMS. Furthermore, no scalability related configuration may be required at system installation and upgrade times. Overload conditions may be detected and appropriate measures may be taken to avoid any negative impact on higher priority tasks like the functioning of the network (call processing) itself.

Further, improved resource exploitation may be possible. In particular, the available distributed processing and bandwidth resources may be exploited, rather than installing additional resources at a dedicated node (e.g. EMS) for taking over processing tasks from a NE.

Further, the reliability may be increased. In particular, without the scheme if the NE is overloaded, the performance data transmission and processing may need to be stopped. However performance data is exactly needed for cause analysis of the overload. When the processing would be shifted to a dedicated node (e.g. EMS), there is still a danger that this node cannot take over the load (single point of failure).

Further, a minimal configuration may be possible. In particular, the operator may not need to perform a resource planning and configure NE's for shifting their processing load to dedicated nodes, since the proxy NE's may be dynamically allocated.

Further, a traffic distribution may be possible. In particular, raw data may only be transmitted peer-to-peer between NE's. Therefore with this solution no bandwidth bottlenecks may be created and one may be independent from bandwidth bottlenecks at the higher levels in the network (e.g. near the EMS).

Furthermore, low delay performance data transmission may be possible, because bottlenecks may be avoided within the general system limits, a low delay between the performance data generation and display to the operator may be assured.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs:

- 100: Mobile network
- 101: Element management system
- 102: Proxy network element
- 103: Source network element
- 104: Operation, Administration, Maintenance network
- 105: Counter Object
- 106: Counter Object
- 107: PM data collector
- 108: PM data collector
- 109: PM data processing unit
- 110: PM data display
- 120: Mobile network
- 121: Element management system
- 122: Proxy network element
- 123: Source network element
- 124: Operation, Administration, Maintenance network
- 125: Counter Object
- 126: Counter Object
- 127: PM data collector
- 128: PM data collector
- 129: PM data processing unit
- 130: PM data processing unit
- 131: PM data display
- 200: PM system
- 201: EMS
- 202: Proxy network element
- 203: Source network element
- 204: Operation, Administration, Maintenance network
- 205: Link
- 206: Link
- 207: Sensor and counter objects
- 208: Sensor and counter objects
- 209: Performance Management/Fault Management (PM/FM) data collector
- 210: PM/FM data collector
- 211: PM/FM data processing unit
- 212: PM/FM data display and analysis
- 300: Performance Management System
- 301: EMS
- 302: Proxy network element
- 303: Source network element
- 304: Proxy Selection Server (PSS)
- 305: Operation, Administration, Maintenance network
- 306: Link
- 307: Link
- 308: Link
- 309: Link
- 310: NE Processing Load/State Monitor
- 311: NE Load Reporter/Determination unit
- 312: NE Link Load/State Monitor
- 313: PM/FM data processing unit
- 314: PM/FM data display and analysis
- 315: Processing administration
- 316: NE Processing Load/State Monitor
- 317: NE Load distribution logic/Determination unit
- 318: NE Link Load/State Monitor
- 319: PM/FM data processing unit
- 320: PM/FM data collector
- 321: Sensor and counter objects
- 322: Proxy Selection Server (PSS) selection logic/processing unit
- 400: Performance Management System
- 401: EMS
- 402: Proxy network element
- 403: Source network element
- 404: Proxy Selection Logic
- 405: Operation, Administration, Maintenance network
- 406: Link
- 407: Link
- 408: Link
- 409: Link
- 410: NE Processing Load/State Monitor
- 411: NE Load Reporter/Determination Unit
- 412: NE Link Load/State Monitor
- 413: PM/FM data processing unit
- 414: PM/FM data display and analysis
- 415: Processing administration
- 416: NE Processing Load/State Monitor
- 417: NE Load distribution logic/Determination Unit
- 418: NE Link Load/State Monitor
- 419: PM/FM data processing unit
- 420: PM/FM data collector
- 421: Sensor and counter objects

## Claims

1. A proxy network element (202) for a mobile network, the proxy network element (202) comprising:
- a processing unit (211),
- wherein the processing unit (211) is adapted to perform specific functions of a source network element (203).

2. The proxy network element (202) according to claim 1,
wherein the specific function relates to a state indication function.

3. The proxy network element (302) according to claim 1, further comprising:
a state monitor (310, 312),
wherein the state monitor (310, 312) is adapted to monitor a present processing and/or link load state of the proxy network element (302).

4. The proxy network element (302) according to claim 3, further comprising:
a determination unit (311),
wherein the determination unit (311) is adapted to determine whether the present load is below a predetermined threshold.

5. The proxy network element (202) according to claim 1,
wherein the proxy network element (202) is adapted to send a load indication flag into the mobile network.

6. The proxy network element (202) according to claim 1, further comprising:
a first input terminal (309),
wherein the first input terminal (309) is adapted to receive collected data from the source network element (203).

7. The proxy network element (202) according to claim 1, further comprising:
a first output terminal (307),
wherein the first output terminal (307) is adapted to transmit output data associated with the specific function.

8. A source network element (303) for a mobile network, the source network element (303) comprising:
a processing unit (319), and
a data collector (320),
wherein the processing unit (319) is adapted to process data collected by the data collector (320), and
wherein the processing unit (319) is further adapted to transmit data collected by the data collector (320) to a proxy network element (302) in the mobile network for processing.

9. The source network element (303) according to claim 8, further comprising:
a state monitor (316, 318),
wherein the state monitor (316, 318) is adapted to monitor a present processing and/or link load state of the source network element(303).

10. The source network element (303) according to claim 9, further comprising:
a determination unit (317),
wherein state monitor (316) is adapted to monitor a present load state,
wherein the determination unit (317) is adapted to determine whether the present load is above a first predetermined threshold, and
wherein the source network element (303) is adapted to send a part of the collected data to a proxy network element (302), which is adapted to perform some processing functions, in case the present load is higher than the first threshold.

11. The source network element (303) according to claim 10,
wherein the determination unit (317) is further adapted to determine whether the present load is above a second predetermined threshold which is higher than the first predetermined threshold, and
wherein the source network element (303) is adapted to send all collected data to a proxy network element (302), which is adapted to perform some processing functions, in case the present load is higher than the second threshold.

12. The source network element (303) according to claim 10,
wherein the source network element (303) is adapted to stop the sending of the collected data in case the present load is below the first threshold.

13. A proxy selection server (304) for a mobile network, the proxy selection server (304) comprising:
an input terminal, and
a selection server processing unit (322),
wherein the input terminal is adapted to receive indication data indicative for a present status from a source network element (303) and at least one proxy network element (302),
wherein the selection server processing unit (322) is adapted to select one proxy network element (302) for processing of collected data of the source network element (303).

14. A mobile network system (300) comprising:
at least one proxy network element (302) according to claim 1,
a source network element (303) according to claim 8, and
an element management system (301),
wherein the proxy network element (302), the source network element (303), and the element management system (301) are connectable to each other by a mobile network (305),
wherein the element management system (301) is adapted to calculate performance indicators from the preprocessed collected data.

15. The mobile network system (300) according to claim 14,
wherein the element management system (301) is adapted to control the mobile network (305) depending on the calculated performance indicators.

16. The mobile network system (300) according to claim 14, further comprising:
a peer to peer connection (309) between the proxy network element (302) and the source network element (303).

17. The mobile network system (300) according to claim 14, further comprising:
a proxy selection server (304) according to claim 13,
wherein the proxy selection server (304) is connectable to the proxy network element (302) and to the source network element (303).

18. The mobile network system (300) according to claim 17,
wherein the proxy selection server (304) is adapted to chose a specific one of the at least one proxy network element (302).

19. A method of performance management in a network comprising at least two network elements (302, 303), the method comprising:
collecting data to be processed in a source network element (303),
deciding whether a state of the source network element (303) is suitable to process the collected data, and
processing the collected data partially or completely at a proxy network element (302) in case it is decided that the state of the source network element (303) is not suitable.

20. A program element, which, when being executed by a processor, is adapted to control or carry out a method of performance management according claim 19.

21. A computer-readable medium, in which a computer program is stored which, when being executed by a processor, is adapted to control or carry out a method of performance management according claim 19.
